# EUROPÄISCHE PATENTSCHRIFT

(11) **EP 3 105 443 B1**
(45) Veröffentlichungstag und Bekanntmachung des Hinweises auf die Patenterteilung: **11.10.2017**
(21) Anmeldenummer: 15700496.1
(22) Anmeldetag: 20.01.2015
(51) Int. Cl.: F02D 41/22, F02D 41/00, F02D 41/18, G01F 25/00

(54) **VERFAHREN ZUR ERKENNUNG EINES DEFEKTEN LUFTMASSENMESSERS EINES VERBRENNUNGSMOTORS**
METHOD FOR RECOGNIZING A DEFECTIVE AIR FLOW SENSOR OF AN INTERNAL COMBUSTION ENGINE
PROCÉDÉ DE DÉTECTION D'UN CAPTEUR DE MASSE D'AIR DÉFECTUEUX D'UN MOTEUR À COMBUSTION INTERNE

(30) Priorität: 13.02.2014 DE 102014202668
(43) Veröffentlichungstag der Anmeldung: 21.12.2016
(73) Patentinhaber: Bayerische Motoren Werke Aktiengesellschaft, 80809 München (DE)
(72) Erfinder: GRASREINER, Sebastian, 81379 München (DE)
(86) Internationale Anmeldenummer: PCT/EP2015/050919
(87) Internationale Veröffentlichungsnummer: WO 2015/121025

(56) Entgegenhaltungen:
- WO-A1-03/056161
- DE-A1- 10 054 199
- DE-A1-102005 006 362
- DE-A1-102005 042 690

## Beschreibung

Die Erfindung betrifft ein Verfahren zur Erkennung eines defekten Luftmassenmessers zur Detektion des Luftmassenstroms von Ansaugluft für eine Anzahl von Zylindern eines Verbrennungsmotors, insbesondere in einem Kraftfahrzeug.

In Verbrennungsmotoren werden häufig Luftmassenmesser verbaut, welche in der Regel im Ansaugrohr des Motors angeordnet sind und den Luftmassenstrom der Ansaugluft messen. Der detektierte Luftmassenstrom wird dabei im Rahmen der Motorsteuerung zur Bestimmung der den Zylindern beizumengenden Kraftstoffmenge verwendet. Durch Verschmutzungen, thermische Beanspruchung oder Verschleiß kann es zu Abweichungen im Signal des Luftmassenmessers kommen, d.h. der über den Luftmassenmesser detektierte Luftmassenstrom weicht von dem tatsächlichen Luftmassenstrom ab. Solche defekten Luftmassenmesser führen zu einer fehlerhaften Kraftstoffzumengung, die auf Dauer zu einer Fehlfunktion des Verbrennungsmotors bis hin zur Ausgabe einer Warnmeldung im Fahrzeug führt (z.B. DE10 2005 006362). Gemischfehler in Verbrennungsmotoren können neben defekten Luftmassenmessern auch vielfältige andere Ursachen haben. Sie können z.B. auf einem fehlerhaften Kraftstoffzufuhrsystem, auf einem fehlerhaften Luftzufuhrsystem oder auf weiteren fehlerhaften Sensoren beruhen. Oftmals ist jedoch der Luftmassenmesser der einzige Auslöser eines Gemischfehlers. Aufgrund der Vielzahl von möglichen Ursachen ist es derzeit schwierig, den Luftmassenmesser eindeutig als Schadteil zu identifizieren. Insbesondere gibt es derzeit keine Möglichkeit, den Defekt eines Luftmassenmessers im eingebauten Zustand im Fahrzeug zu erkennen. Ferner gibt es auch keine einfach durchzuführenden Tests zur Überprüfung von ausgebauten Luftmassenmessern. Zur Behebung von Gemischfehlern sind deshalb oftmals viele Wiederholrepa raturen erforderlich, da Bauteile auf Verdacht getauscht werden. Dies führt zur erhöhten Kosten.

Aufgabe der Erfindung ist es deshalb, ein Verfahren und eine entsprechende Motortesteinrichtung zu schaffen, mit denen einfach und zuverlässig defekte Luftmassenmesser im Gesamtsystem des Verbrennungsmotors erkannt werden können, ohne die vorhandenen Luftmassenmesser dafür auszubauen.

Diese Aufgabe wird durch das Verfahren gemäß Patentanspruch 1 bzw. die Motortesteinrichtung gemäß Patentanspruch 14 gelöst. Weiterbildungen der Erfindung sind in den abhängigen Ansprüchen definiert.

Das erfindungsgemäße Verfahren dient zur Erkennung eines und ggf. auch mehrerer defekter Luftmassenmesser in einem Verbrennungsmotor. Der Luftmassenmesser dient dabei zur Detektion des Luftmassenstroms von Ansaugluft für eine Anzahl von Zylindern des Verbrennungsmotors, z.B. für eine Zylinderbank. Der Verbrennungsmotor ist vorzugsweise der Motor in einem Kraftfahrzeug.

Erfindungsgemäß wird der Verbrennungsmotor im Rahmen eines Testablaufs mittels einer Vorsteuerung bei deaktivierter Gemischregelung betrieben. Die Vorsteuerung gibt dabei in an sich bekannter Weise Stellwerte für das Gemisch aus Kraftstoff und Luft in den jeweiligen Zylindern aus, d.h. die Vorsteuerung legt vorab geeignete Werte für die Menge an beizu mengendem Kraftstoff fest. Diese Werte der Vorsteuerung werden in an sich bekannter Weise im Normalbetrieb des Verbrennungsmotors (d.h. nicht im Betrieb des erfindungsgemäßen Testablaufs) über die (aktivierte) Gemischregelung basierend auf einer Gemischabweichung des aktuellen Gemischs von einem stöchiometrischen Gemisch variiert. Die von der Vorsteuerung ausgegebenen Stellwerte sollten dabei möglichst gut mit den über die Gemischregelung angepassten bzw. variierten Stellwerten übereinstimmen. Die Gemischabweichung wird über eine Messeinrichtung und insbesondere über eine an sich bekannte Lambda-Sonde erfasst. Insbesondere wird die Gemischabweichung durch den Lambda-Wert bzw. die Abweichung des Lambda-Werts von 1 repräsentiert. Der Lambda-Wert ist dabei eine hinlänglich bekannte Größe, wobei ein Lambda-Wert von 1 das stöchiometrische Gemisch repräsentiert. Lambda-Werte oberhalb von 1 deuten auf einen Luftüberschuss und damit "mageres" Gemisch hin. Lambda-Werte unterhalb von 1 kennzeichnen einen Kraftstoffüberschuss und damit "fettes" Gemisch.

In einem Schritt a) des erfindungsgemäßen Testablaufs wird der Verbrennungsmotor auf eine oder mehrere unterschiedliche Leerlaufdrehzahlen eingestellt und für eine jeweilige Leerlaufdrehzahl wird die Gemischabweichung bei deaktivierter Gemischregelung erfasst. Gemäß einer Auswertung in einem Schritt b) wird der Luftmassenmesser dann als defekt eingestuft, wenn die erfasste Gemischabweichung bzw. erfassten Gemischabweichungen eine Anzahl von Kriterien (d.h. mindestens ein Kriterium) erfüllen, wobei ein erstes Kriterium aus der Anzahl von Kriterien dann erfüllt ist, wenn die erfasste Gemischabweichung für eine der eingestellten Leerlaufdrehzahlen ein vorbestimmtes Maß überschreitet. Insbesondere ist das erste Kriterium dann erfüllt, wenn die erfasste Gemischabweichung für die maximale eingestellte Leerlaufdrehzahl ein vorbestimmtes Maß hin zu Gemischen mit Kraftstoffüberschuss gegenüber dem stöchiometrischen Gemisch überschreitet. Wird die Gemischabweichung basierend auf Lambda-Werten erfasst, unterschreitet in diesem Fall der gemessene Lambda-Wert einen Schwellwert kleiner 1.

Dem erfindungsgemäßen Verfahren liegt die Erkenntnis zugrunde, dass über die Analyse von Gemischabweichungen bei unterschiedlichen Leerlau fdrehzahlen auf einfache Weise defekte Luftmassenmesser erfasst werden können. Unter einem defekten Luftmassenmesser ist dabei ein Luftmassenmesser zu verstehen, dessen gemessene Luftmassenströme über einen Toleranzbereich hinaus von den tatsächlichen Luftmassenströmen abweichen. Mit anderen Worten muss ein defekter Luftmassenmesser nicht vollkommen betriebsunfähig sein, sondern es ist ausreichend, wenn er nicht mehr ausreichend genaue Messwerte liefert.

In einer besonders bevorzugten Ausführungsform wird mit dem erfindungsgemäßen Verfahren das spezielle Fehlerbild eines Luftmassenmessers detektiert, dessen Messwerte bei niedrigen Luftmassenströmen stark von dem tatsächlichen Luftmassenstrom abweichen und dabei insbesondere einen zu hohen Luftmassenstrom repräsentieren. In diesem Fall umfassen die oben beschriebenen Kriterien neben dem ersten Kriterium ferner ein zweites und ein drittes Kriterium, wobei nur bei der Erfüllung des ersten, zweiten und dritten Kriteriums unmittelbar ein defekter Luftmassenmesser erkannt wird. Dabei ist das zweite Kriterium dann erfüllt, wenn die erfasste Gemischabweichung bei steigenden eingestellten Leerlaufdrehzahlen abnimmt (Monotonieforderung). Ferner ist das dritte Kriterium dann erfüllt, wenn der betragsmäßige Unterschied zwischen der Gemischabweichung bei minimaler eingestellter Leerlaufdrehzahl und maximaler eingestellter Leerlaufdrehzahl ein vorgegebenes Maß überschreitet.

Wie bereits oben erwähnt, wird die erfasste Gemischabweichung vorzugsweise durch eine Abweichung des Lambda-Werts von 1 repräsentiert, wobei der Lambda-Wert insbesondere ein Mittelwert über mehrere, in einem stationären Messintervall gemessene Lambda-Werte für die jeweilige eingestellte Leerlaufdrehzahl ist. Ein stationäres Messintervall zeichnet sich dabei dadurch aus, dass die Betriebsparameter des Verbrennungsmotors in dem Messintervall nur geringe Fluktuationen (d.h. Fluktuationen innerhalb entsprechender Toleranzbereiche) aufweisen.

Wird die Gemischabweichung durch die Abweichung des Lambda-Werts repräsentiert, ist das erste und/oder zweite und/oder dritte Kriterium vorzugsweise derart definiert, dass:
- das erste Kriterium dann erfüllt ist, wenn der Lambda-Wert bei maximaler eingestellter Leerlaufdrehzahl um mehr als einen vorgegebenen Schellwert von 1 abweicht und dieser Lambda-Wert ferner vorzugsweise kleiner 1 ist;
   und/oder
- das zweite Kriterium dann erfüllt ist, wenn der Lambda-Wert bei steigenden eingestellten Leerlaufdrehzahlwerten größer wird und dabei vorzugsweise nie über 1 liegt;
   und/oder
- das dritte Kriterium dann erfüllt ist, wenn der betragsmäßige Unterschied zwischen den Lambda-Werten bei minimaler eingestellter Leerlaufdrehzahl und maximaler eingestellter Leerlaufdrehzahl einen vorgegebenen Unterschiedswert überschreitet.

Vorzugsweise liegt der soeben definierte Schwellwert für das erste Kriterium zwischen 0,08 und 0,2, insbesondere bei 0,115. Vorzugsweise liegt der soeben definierte vorgegebene Unterschiedswert für das dritte Kriterium zwischen 0,03 und 0,1, insbesondere bei 0,06.

In einer weiteren bevorzugten Ausführungsform umfassen die voreingestellten Leerlaufdrehzahlen einen oder mehrere der folgenden Leerlaufdrehzahlwerte:
- einen Leerlaufdrehzahlwert zwischen 800 und 900 rpm (rpm = Umdrehungen pro Minute), insbesondere bei 850 rpm;
- einen Leerlaufdrehzahlwert zwischen 1000 und 1100 rpm, insbesondere bei 1050 rpm;
- einen Leerlaufdrehzahlwert zwischen 1400 und 1600 rpm, insbesondere bei 1500 rpm;
- einen Leerlaufdrehzahlwert zwischen 1900 und 2100 rpm, insbesondere bei 2000 rpm.

In einer weiteren bevorzugten Variante des erfindungsgemäßen Verfahrens werden ein oder mehrere Betriebsparameter des Verbrennungsmotors für die jeweilige eingestellte Leerlaufdrehzahl konstant gehalten. Solche Betriebsparameter betreffen insbesondere die elektrische Last am Verbrennungsmotor und/oder die Steuerzeiten von Ventilen des Verbrennungsmotors und/oder die Kühlmitteltemperatur des Verbrennungsmotors. Nichtsdestotrotz können die Betriebsparameter auch andere Parameter des Motors betreffen. Mit dieser Variante wird die Reproduzierbarkeit des erfindungsgemäßen Tests sichergestellt.

In einer weiteren Ausgestaltung des erfindungsgemäßen Verfahrens sind die von der Vorsteuerung ausgegebenen Stellwerte über prozentuale Adaptionswerte für jeweilige Betriebspunkte des Verbrennungsmotors bei unterschiedlichen Motordrehzahlen adaptiert. Mit anderen Worten umfasst die Vorsteuerung eine sog. Gemischadaption, bei der die Stellwerte der Vorsteuerung im Falle, dass diese dauerhaft von den durch die Gemischregelung nachgeregelten Stellwerten abweichen, direkt in der Vorsteuerung geeignet angepasst werden. Die entsprechenden Adaptionswerte sind dabei verknüpfend in der Vorsteuerung hinterlegt und werden in der Regel während des Betriebs des Verbrennungsmotors kontinuierlich gelernt. Im Falle der Verwendung einer solchen Gemischadaption werden in einer bevorzugten Variante der Erfindung vor der Durchführung von Schritt a) die Adaptionswerte für unterschiedliche Drehzahlen aus der Vorsteuerung ausgelesen. Nach dem Auslesen der Adaptionswerte werden diese vorzugsweise in der Vorsteuerung rückgesetzt, d.h. auf Werte gesetzt, bei denen keine Adaption der Stellwerte der Vorsteuerung erfolgt. Demzufolge wird der nachfolgende Motortest mit den originären, nicht-adaptierten Stellwerten durchgeführt, wodurch die Reproduzierbarkeit des Tests gewährleistet wird. Außerdem wird mit dieser Vorgehensweise der Testablau f an die Konditionen des Motors nach Auslieferung angepasst, also an einen Zeitpunkt, als noch keine Gemischadaptionswerte gelernt werden konnten.

Liegen ausgelesene Adaptionswerte vor, wird eine Anzahl von weiteren Kriterien überprüft, falls im obigen Schritt b) der Luftmassenmesser nicht als defekt eingestuft wird. Die Anzahl von weiteren Kriterien umfasst dabei ein Kriterium an die Adaptionswerte, wobei es zur Erfüllung des Kriteriums an die Adaptionswerte erforderlich ist, dass der ausgelesene minimale Adaptionswert eine vorgegebene erste Schwelle unterschreitet und der ausgelesene maximale Adaptionswert eine vorgegebenen zweite Schwelle überschreitet. Sind die Anzahl von weiteren Kriterien erfüllt, wird der Luftmassenmesser, der ursprünglich nicht als defekt eingestuft wurde, nunmehr endgültig als defekt bewertet. Bei Nicht-Erfüllung der Anzahl von Kriterien wird der Luftmassenmesser weiterhin als intakt eingestuft.

In einer besonders bevorzugten Ausführungsform ist das Kriterium an die Adaptionswerte dann erfüllt, wenn der ausgelesene minimale Adaptionswert eine vorgegebene erste Schwelle, insbesondere -13 % der beizumengenden Kraftstoffmenge, unterschreitet und der ausgelesene maximale Adaptionswert eine vorgegebene zweite Schwelle, insbesondere +1 % der beizumengenden Kraftstoffmenge, überschreitet und ferner der Drehzahlwert des Verbrennungsmotors beim minimalen Adaptionswert unter einer ersten Drehzahlschwelle, insbesondere unterhalb von 1750 rpm, liegt und der Drehzahlwert des Verbrennungsmotors beim maximalen Adaptionswert oberhalb einer zweiten Drehzahlschwelle, insbesondere oberhalb 5250 rpm, liegt.

In einer weiteren bevorzugten Ausführungsform wird bei ausgeschaltetem Verbrennungsmotor ein Ruhesignal des Luftmassenmessers erfasst, wobei eine Variante eines solchen Ruhesignals in der speziellen Beschreibung erläutert wird. Die Anzahl der weiteren Kriterien umfasst dabei ferner ein Kriterium an das Ruhesignal, welches dann erfüllt ist, wenn das Ruhesignal außerhalb eines Normbereichs liegt. Somit wird ein Luftmassenmesser nur dann als defekt eingestuft, wenn sowohl das Kriterium an die Adaptionswerte als auch das Kriterium an das Ruhesignal erfüllt ist.

In einer weiteren Ausgestaltung des erfindungsgemäßen Verfahrens wird vor Beginn des Testablaufs das Vorliegen einer oder mehrerer, vom Verbrennungsmotor zu erfüllender Startbedingungen überprüft, wobei nur bei Erfüllung der Startbedingung oder Startbedingungen der Testablauf gestartet wird. Verschiedene Varianten von solchen Startbedingungen finden sich unter anderem in der speziellen Beschreibung.

In einer besonders bevorzugten Ausführungsform basieren eine oder mehrere der Startbedingungen auf Fehlereinträgen im Fehlerspeicher des Steuergeräts des Verbrennungsmotors, wobei vorzugsweise eine Startbedingung derart ausgestaltet ist, dass die relative Last (ein Maß für die Luftmenge im Zylinder des Verbrennungsmotors) bei den entsprechenden Fehlereinträgen unter einem Schwellwert, vorzugsweise unter 40 %, liegt. Auf diese Weise wird das oben beschriebene Fehlerbild berücksichtigt, wonach der Luftmassenmesser bei kleinen Lasten (d.h. real kleinen Luftmassenströmen) falsche Luftmassenströme liefert und somit zu hohen Gemischfehlern führt. Der Begriff der relativen Last ist für den Fachmann ein stehender Begriff und liegt um 100 % bei Saugmotoren mit voll geöffneter Drosselklappe und um 20 % für leerlaufnahe Betriebspunkte. Umfasst der Motor einen Turbolader oder ein anderes Aufladeverfahren, kann die relative Last auch über 100 % liegen.

Neben dem oben beschriebenen Verfahren betrifft die Erfindung ferner eine Motortesteinrichtung zur Erkennung eines defekten Luftmassenmessers zur Detektion des Luftmassenstroms von Ansaugluft für eine Anzahl von Zylindern eines Verbrennungsmotors. Die Motortesteinrichtung ist zur Durchführung des erfindungsgemäßen Verfahrens bzw. einer oder mehrerer bevorzugter Varianten des erfindungsgemäßen Verfahrens eingerichtet. Die Motortesteinrichtung kann dabei ein externes Motortestgerät sein bzw. ggf. auch im Kraftfahrzeug integriert sein.

Die Erfindung betrifft darüber hinaus ein Kraftfahrzeug mit Verbrennungsmotor und einem oder mehreren Luftmassenmessern, wobei das Kraftfahrzeug die oben beschriebene Motortesteinrichtung zum Testen des oder der Luftmassenmesser umfasst.

Ausführungsbeispiele der Erfindung werden nachfolgend anhand der beigefügten Figuren detailliert beschrieben.

Es zeigen:
- Fig. 1: ein Ablaufdiagramm, welches die wesentlichen Schritte einer Ausführungsform des erfindungsgemäßen Verfahrens verdeutlicht;
- Fig. 2: ein Ablaufdiagramm, welches den Ablauf einer Auswertung gemäß einer Ausführungsform des erfindungsgemäßen Verfahrens wiedergibt;
- Fig. 3: ein Diagramm, welches beispielhaft Gemischabweichungen wiedergibt, die gemäß einer Variante der Erfindung für einen Verbrennungsmotor ermittelt wurden;
- Fig. 4: ein Diagramm, welches beispielhaft die aus einem Speicher im Kraftfahrzeug ausgelesenen Abhängigkeiten zwischen der Motordrehzahl eines Verbrennungsmotors und einem Adaptionswert zur Anpassung der Vorsteuerung zeigt; und
- Fig. 5: ein Diagramm, welches beispielhaft die Ruhesignale von zwei Luftmassenmessern wiedergibt, die in einer Ausführungsform des erfindungsgemäßen Verfahrens für einen Verbrennungsmotor ermittelt wurden.

Nachfolgend wird eine Variante des erfindungsgemäßen Verfahrens zum Funktionstest von Luftmassenmessern in einem Verbrennungsmotors erläutert, der zwei Zylinderbänke mit jeweils 4 Zylindern aufweist, wobei jede Zylinderbank über einen eigenen Luftmassenmesser im Ansaugrohr verfügt. Dabei wird separat für jede Zylinderbank über entsprechende Lambdasonden das Gemischverhältnis von Kraftstoff zu Luft und damit der Lambda-Wert gemessen. Mit dem nachfolgend erläuterten Testablauf kann gleichzeitig für beide Luftmassenmesser der jeweiligen Zylinderbänke deren Funktionstüchtigkeit überprüft werden.

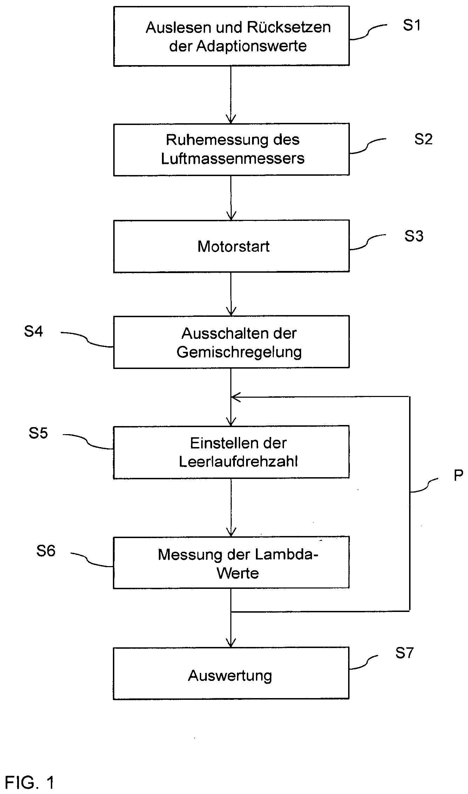

Zur Feststellung von Defekten der Luftmassenmesser wird der in Fig. 1 dargestellte Testablauf durchgeführt. Dabei sind nur die wesentlichen Schritte des Testablaufs wiedergegeben, wobei weitere durchgeführte Schritte im Rahmen der nachfolgenden Erläuterung dargelegt werden. Der Test wird mit einem Motortestgerät in einer Fahrzeugwerkstatt durchgeführt. Dieses Testgerät ermöglicht dem Mechaniker eine Diagnose von Fehlfunktionen des Antriebsstrangs und gibt ihm dabei über eine entsprechende Benutzerschnittstelle in der Form eines Bildschirms Handlungsanweisungen. Hierfür umfasst das Motortestgerät ein Testmodul, das dem Mechaniker schrittweise über Bildschirmabfragen und Anweisungen durch den Test führt. Ziel ist dabei ein Schnelltest, d.h. eine elektrische Werkstattdiagnose, die unter Zuhilfenahme von so wenig wie möglich manueller Arbeit eine Eigendiagnose von Komponenten des Verbrennungsmotors ermöglicht. Dabei werden eine hohe Reproduzierbarkeit, eine geringe Beeinflussung des Verbrennungsmotors und die Ausschaltung von Fehlereinflüssen bei der Fehlerfindung durch einen hohen Grad der Automatisierung erreicht.

Wie bereits eingangs erwähnt, ist ein Luftmassenmesser ein Messgerät im Ansaugrohr des Verbrennungsmotors, das den über ihn fließenden Luftmassenstrom misst. In der hier beschriebenen Variante ist der Luftmassenmesser ein sog. Heißfilmluftmassenmesser, der mittels Abkühlung eines beheizten Hitzdrahts und über die Kenntnis der Umgebungslufttemperatur den Luftmassenstrom erfasst. Der Luftmassenmesser wird zur Lasterfassung und Laststeuerung bei Ottomotoren und zur Diagnose der Luftstrecke genutzt. Defekte Luftmassenmesser führen zu fehlerhaften Betriebszuständen des Verbrennungsmotors. Der erfindungsgemäße Test wird in der Regel dann durchgeführt, wenn in dem Kraftfahrzeug eine Motorwarnlampe leuchtet und der Fehlerspeicher im Fahrzeug einen Gemischfehler anzeigt, der durch eine dauerhafte Abweichung der aus der Vorsteuerung stammenden Stellwerte für die einzuspritzende Kraftstoffmenge von den durch die Gemischregelung nachgeregelten Stellwerten verursacht wird.

Im Rahmen des Testablaufs der Fig. 1 werden vor Beginn des Tests (nicht als separater Schritt in Fig. 1 gezeigt) zunächst vorbestimmte Startbedingungen eingestellt. Sollten diese Startbedingungen nicht vorliegen, kann der Test nicht gestartet werden. Gemäß den Startbedingungen muss die Zündung des Kraftfahrzeugs angeschaltet sein, der Motor muss betriebswarm sein und die die Luftmassenmesser müssen angeschlossen sein. Ferner muss der Motor ausgeschaltet sein, ein Ladegerät an die Batterie des Fahrzeugs angeschlossen sein sowie der Klimakompressor des Fahrzeugs ausgeschaltet sein. Durch die beiden zuletzt genannten Bedingungen wird Last von dem Verbrennungsmotor genommen, um hierdurch eine gute Reproduzierbarkeit des Tests zu gewährleisten. Ferner werden die Drosselklappen geschlossen, um Außeneinflüsse bei der weiter unten beschriebenen Ruhemessung der Luftmassenmesser auszuschließen.

Um sicherzustellen, dass aus der nachfolgend beschriebenen Messung der Gemischqualität basierend auf Lambda-Werten auch auf einen defekten Luftmassenmesser geschlossen werden kann, werden vor dem Testbeginn möglichst viele Quereinflüsse ausgeschlossen. Diese werden mit Hilfe bereits vorhandener Testmodule und mit Standarddiagnostiken bearbeitet. Solche Quereinflüsse können durch Defekte in folgenden Komponenten verursacht sein:
Drosselklappensteller, Katalysator, Lambda-Sonde, Ansauglufttemperatursensor, Saugrohrdrucksensor, Kraftstoffmengensteuerventil, Raildrucksensor, Kraftstoff-Niederdrucksensor, Kraftstoff-Hochdruckpumpe, Injektoren, Auslass/Einlass-Steuerzeitensteller, Zündung, Tankentlüftung.

Ferner stellt eine Leckage in der Ansaugführung, der Sauganlage, des Abgaskrümmers, der Abgasanlage sowie der Kurbelgehäuseentlüftung einen Quereinfluss dar.

Gemäß Schritt S1 des Testablaufs werden nach Abarbeitung der Quereinflüsse zunächst Adaptionswerte aus der Vorsteuerung des Verbrennungsmotors ausgelesen. Die gesamthafte Vorsteuerung umfasst dabei eine Gemischadaption, welche dauerhafte Unterschiede der über die Vorsteuerung ausgegebenen Stellwerte für die einzuspritzende Kraftstoffmenge von den über die Gemischregelung nachgeregelten Stellwerten erfasst und diese Abweichungen über einen Offset des Stellwerts in der Vorsteuerung berücksichtigt. Mit anderen Worten wird bei einer kontinuierlichen Nachregelung des Gemischs innerhalb eines Betriebspunkts iterativ der entsprechende Stellwert der Vorsteuerung "gelernt". Damit stellt sich eine selbstregulierende Verbesserung der Gemisch-Vorsteuerung ein und das Dynamikverhalten des Verbrennungsmotors wird verbessert, denn die Gemischregelung arbeitet mit einer zeitlichen Verzögerung und rein reaktiv. Für den weiteren Testablauf müssen die Adaptionswerte auf den Auslieferungszustand des Fahrzeugs zurückgesetzt ("genullt") werden. Demzufolge werden am Ende von Schritt S1 die Adaptionswerte aus der Vorsteuerung gelöscht bzw. rückgesetzt, so dass die Vorsteuerung ihre originären Stellwerte ausgibt und damit reproduzierbare Bedingu ngen im nachfolgenden Test vorliegen. Die nach dem Schritt S1 erhaltenen Adaptionswerte geben in Abhängigkeit der Parameter Motorlast und Motordrehzahl sowie für 100°C Kühlmitteltemperatur den entsprechenden Adaptionswert für den Stellwert in der Vorsteuerung an, wobei dieser Adaptionswert ein prozentualer Korrekturfaktor für den Stellwert und damit für die eingespritzte Kraftstoffmenge ist.

Nach Auslesen und Rücksetzen der Adaptionswerte wird im nächsten Schritt S2 eine Ruhemessung der jeweiligen Luftmassenmesser durchgeführt. Bei dieser Ruhemessung wird das Messsignal des Luftmassenmessers bei abgeschaltetem Motor, d.h. bei einem Luftmassenstrom von Null, als Referenz erfasst. In der hier beschriebenen Ausführungsform wird dieses Ruhesignal durch einen PWM-Wert repräsentiert, der eine durchschnittliche Zeitspanne in dem PWM-Signal der Heizung repräsentiert, welche für die interne Steuerung des Luftmassenmessers genutzt wird. Der PWM-Wert korreliert somit mit der Zeitspanne in einer PWM-Periode, während der dem Hitzdraht elektrische Leistung über die Heizung zugeführt wird. Aus dieser Zeitspanne kann der Luftmassenstrom abgeleitet werden. Für den PWM-Wert ist im Falle der Ruhemessung ein Toleranzbereich bzw. Normbereich vorgegeben, der für den hier betrachteten Luftmassenmesser zwischen 527 µs und 529 µs liegt. Wie weiter unten beschrieben, kann die Ruhemessung der Luftmassenmesser in bestimmten Fällen dazu verwendet werden, um den Defekt eines Luftmassenmessers festzustellen.

Nach der Ruhemessung der Luftmassenmessers wird der Motor schließlich in Schritt S3 gestartet. Ferner wird eine Abgasabsaugung an den Auspuff des Fahrzeugs angeschlossen. Nach dem Motorstart wird in Schritt S4 die Gemischregelung des Motors abgeschaltet, so dass das Gemisch nur noch basierend auf dem Stellwert der Vorsteuerung eingestellt wird. Anschließend wird der im Kraftfahrzeug verbaute Generator abgesteuert, um Last vom Verbrennungsmotor zu nehmen und wiederum eine gute Reproduzierbarkeit des Tests zu gewährleisten. Es wird dann eine vordefinierte Zeit gewartet (z.B. 70 Sekunden) und anschließend wird das Tankentlüftungsventil geschlossen, was den Quereinfluss von Kraftstoffdämpfen auf die Gemischqualität im Test eliminiert.

In Schritt S5 wird eine erste Leerlaufdrehzahl des Verbrennungsmotors eingestellt, die im hier beschriebenen Ausführungsbeispiel bei etwa 850 rpm liegt. Es wird dann wieder eine vorbestimmte Zeit gewartet (z.B. 30 Sekunden), um sicherzustellen, dass sich ein Betriebspunkt mit stabilem Lambda-Wert einstellt. In Schritt S6 werden schließlich mit der entsprechenden Lambda-Sonde mehrere Lambda-Werte des Gemischs der jeweiligen Zylinderbänke gemessen (z.B. 15 Lambda-Werte). Anschließend werden die Lambda-Werte gemittelt und dieser Mittelwert stellt den für die entsprechende Leerlaufdrehzahl erfassten Lambda-Wert dar.

Die Schritte S5 und S6 werden anschließend mehrere Male wiederholt, wie durch den Pfeil P in Fig. 1 angedeutet ist. Insbesondere wird mehrmals hintereinander die Leerlaufdrehzahl erhöht und anschließend für die neue Leerlaufdrehzahl ein neuer Lambda-Wert erfasst. In der hier beschriebenen Ausführungsform werden neben der Leerlaufdrehzahl von 850 rpm entsprechende (gemittelte) Lambda-Werte für Leerlaufdrehzahlen von 1050 rpm, 1500 rpm und 2000 rpm erfasst. Bei der jeweiligen Erfassung der Lambda-Werte wird ferner sichergestellt, dass die Steuerzeiten der Ventile festgehalten werden, um Einflüsse auf den Lambda-Wert durch variable Ventilsteuerzeiten auszuschließen. Wie für den ersten Drehzahlwert von 850 rpm wird auch für die weiteren höheren Drehzahlwerte immer eine vordefinierte Zeit vor der Messung der Lambda-Werte gewartet, um einen stabilen Betriebspunkt des Verbrennungsmotors mit konstantem Lambda-Wert sicherzustellen.

Nach der Erfassung der Lambda-Werte für die unterschiedlichen Leerlaufdrehzahlen ist der eigentliche Testablauf beendet und der Verbrennungsmotor wird wieder in seinen Normalbetriebszustand rückgesetzt. D.h., die Gemischregelung wird wieder eingeschaltet, die Leerlaufdrehzahl wird auf den Normalwert rückgesetzt, die Absteuerung des Tankbelüftungsventils wird rückgesetzt, die Generatorabsteuerung wird beendet, die Steuerzeiten werden nicht mehr festgehalten und der Klimakompressor wird wieder aktiviert.

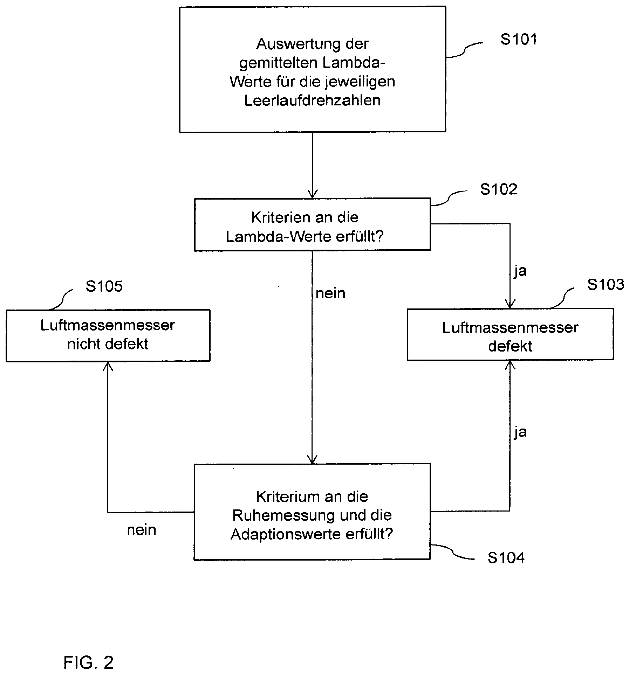

Im nachfolgenden Schritt S7 erfolgt die Auswertung des Tests, welche anhand von Fig. 2 näher beschrieben wird. Für diese Auswertung ist der Motorlauf nicht mehr von Nöten. In dem hier betrachteten Szenario soll das Fehlerbild von verschmutzen Luftmassenmessern detektiert werden. Bei solchen Luftmassenmessern wird bei kleinen Luftmassenströmen ein zu hoher Massenfluss als der tatsächliche Massenfluss detektiert. Dies liegt daran, dass bei kleinen Luftmassenströmen die schlechten Wärmeübergänge des verschmutzen Luftmassenmessers zwischen Gasströmung und Hitzdraht überwiegen. Demgegenüber zeigt ein verschmutzter Luftmassenmesser bei mittleren und hohen Luftmassenströmen eine geringere bzw. im Toleranzbereich liegende Signalabwe ichung zwischen dem tatsächlichen Massenfluss und dem detektierten Massenfluss. Ferner ist bei sehr hohen Luftmassenströmen die Signalabweichung durchaus derart, dass ein zu niedriger Massenfluss gegenüber dem tatsächlichen Massenfluss detektiert wird.

In einer bevorzugten Variante wird vor dem Start des Tests ferner der Fehlerspeicher des Steuergeräts des Verbrennungsmotors ausgelesen. Ergibt sich dabei, dass die relativen Lasten, bei denen die Fehlereinträge erfolgt sind, oberhalb 40 % liegen, wird der Test nicht gestartet. Dies liegt daran, dass nur bei Fehlereinträgen mit geringen relativen Lasten (und damit geringen Luftmassenströmen) das oben beschriebene Fehlerbild eines verschmutzten Luftmassenmessers vorliegen kann, welches gemäß der hier beschriebenen Ausführungsform zu detektieren ist. Die Ermittlung der relativen Last für entsprechende Betriebspunkte des Kraftfahrzeugs ist dem Fachmann bekannt und wird deshalb nicht näher beschrieben.

Gemäß Fig. 2 werden in Schritt S101 mittels einer entsprechenden Auswertelogik die gemittelten Lambda-Werte ausgewertet. Dabei wird die Erfüllung von drei Kriterien überprüft, wobei die Bedingungen für die Erfüllung der Kriterien wie folgt lauten:
- (1-λ(LD)) nimmt mit steigenden Leerlaufdrehzahlwerten ab (d.h. die Werte sind streng monoton fallend);
- (1-λ(LDmin))-(1-λ(LDmax))>0,06;
- (1-A(LDmax))>0,115.

Dabei bezeichnet A(LD) den gemittelten Lambda-Wert bei einer entsprechenden Leerlaufdrehzahl LD, für die der (gemittelte) Lambda-Wert erfasst wurde. LDmax entspricht dem maximalen Wert der Leerlaufdrehzahl und LD min dem minimalen Wert der Leerlaufdrehzahl, bei denen die Messungen durchgeführt wurden.

Sind die oben genannten Kriterien erfüllt, entspricht dies dem oben beschriebenen Fehlerbild, bei dem durch den Luftmassenmesser bei kleinen Drehzahlen ein zu großer Luftmassenstrom mit der Konsequenz eines zu fett eingestellten Gemischs detektiert wird. Ergibt sich somit in Schritt S102 der Fig. 2, dass die genannten Kriterien erfüllt sind, wird der entsprechende Luftmassenmesser als defekt eingestuft, wie durch Schritt S103 verdeutlicht ist.

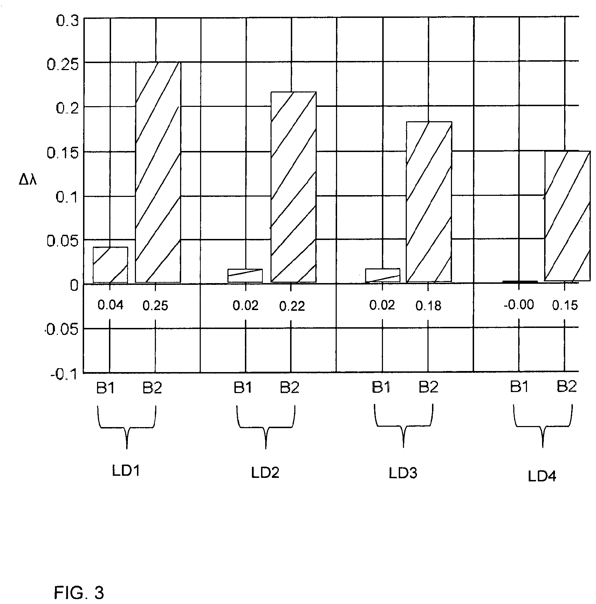

In dem Diagramm der Fig. 3 sind beispielhaft für einen Motor mit den beiden Zylinderbänken B1 und B2 mögliche gemittelte Lambda-Werte für die verschiedenen Leerlaufdrehzahlen LD1, LD2, LD3 und LD4 wiedergegeben. LD1 entspricht dabei der niedrigsten Leerlaufdrehzahl bei 850 rpm, LD2 der Leerlaufdrehzahl bei 1050 rpm, LD3 der Leerlaufdrehzahl bei 1500 rpm und LD4 der Leerlaufdrehzahl bei 2000 rpm. Entlang der Ordinate ist dabei die Abweichung Δλ= 1-λ(LD) angegeben. Diese Abweichung wird durch vertikale Balken und zugeordnete Zahlenwerte für die entsprechenden Drehzahlwerte und Zylinderbänke repräsentiert. Höhere Balken entsprechen einem kleineren Lambda-Wert und damit einem zu fett eingestellten Gemisch. Wie sich aus Fig. 3 ergibt, erfüllt der Luftmassenmesser der Zylinderbank B2 die oben genannten Kriterien, wohingegen diese Kriterien nicht durch den Luftmassenmesser der Zylinderbank B1 erfüllt werden. Der Luftmassenmesser der Bank B2 wird somit als defekt detektiert und der Luftmassenmesser der Bank B1 wird mit diesem Kriterium allein als "vorerst intakt" diagnostiziert.

Wird in Schritt S102 der Fig. 2 festgestellt, dass die entsprechenden Lambda-Kriterien für einen Defekt nicht erfüllt sind, werden in einem nächsten Schritt S104 Kriterien an die oben beschriebene Ruhemessung sowie an die im Rahmen des Testablaufs ausgelesenen Adaptionswerte überprüft. In Bezug auf die ausgelesenen Adaptionswerte werden zwei Kriterien überprüft, die unter folgenden Bedingungen erfüllt sind:
- der minimale Adaptionswert ist kleiner als -13 % und dieser minimale Adaptionswert tritt bei einer Motordrehzahl von weniger als 1750 rpm auf;
- der maximale Adaptionswert ist größer als +1 % und tritt bei einer Motordrehzahl von mehr als 5250 rpm auf.

Die in den obigen Kriterien genannten Grenzen für die Adaptionswerte und Drehzahlwerte sind beispielhaft und können je nach Ausgestaltung des Verfahrens in gewissen Grenzen hiervon abweichen.

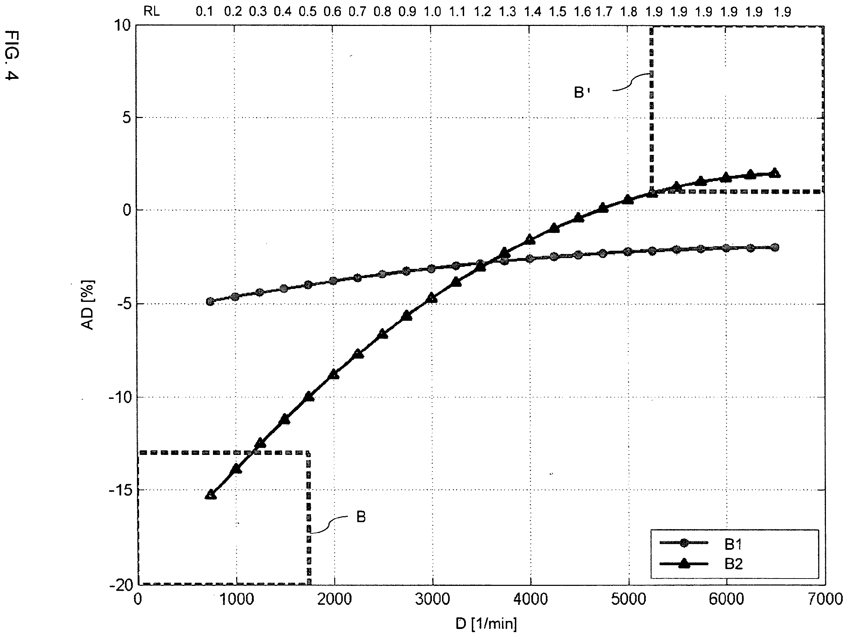

Zur Verdeutlichung ist in Fig. 4 ein möglicher Verlauf der prozentualen Adaptionswerte AD in Abhängigkeit von der Motordrehzahl D für die beiden Zylinderbänke B1 und B2 wiedergegeben. Jeder Adaptionswert gilt dabei für eine entsprechende Motordrehzahl, die mit einer relativen Motorlast RL korreliert ist, die oberhalb des dargestellten Diagramms angegeben ist. Die Adaptionswerte gelten für 100 °C Kühlmitteltemperatur.

In dem Diagramm der Fig. 4 wird durch den Block B der Bereich von Drehzahlwerten und Adaptionswerten repräsentiert, der dem oben genannten ersten Kriterium für die Adaptionswerte entspricht. Demgegenüber bezeichnet der Bereich B' einen Bereich von Drehzahlwerten und Adaptionswerten, der dem oben genannten zweiten Kriterium für die Adaptionswerte entspricht. Wie sich aus Fig. 4 ergibt, erfüllen die Adaptionswerte der Zylinderbank B2 die oben genannten Kriterien, wohingegen die Kriterien für die Zylinderbank B1 nicht erfüllt sind.

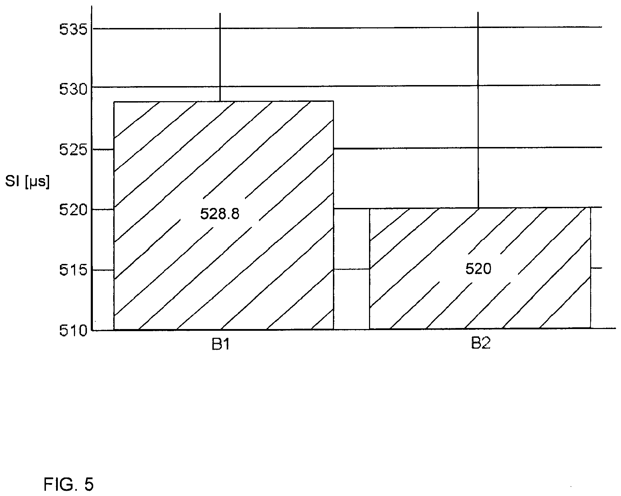

Ferner wird ein Kriterium in Bezug auf die Ruhemessung der Luftmassenmesser überprüft. Wie bereits oben beschrieben, wird dabei überprüft, ob der entsprechende PWM-Wert in einem vorgegebenen Normbereich liegt. Dies wird anhand von Fig. 5 nochmals verdeutlicht. In dieser Figur ist durch entsprechenden Balken der PWM-Wert in der Form des Ruhesignals S I für die jeweiligen Zylinderbänke B1 und B2 wiedergegeben. Dieser liegt für die Zylinderbank B1 bei 528,8 µs und für die Zylinderbank B2 bei 520 µs. Der Normbereich wird durch das Intervall zwischen 527 µs und 529 µs repräsentiert. Gemäß Fig. 5 liegt der Luftmassenmesser der Zylinderbank B2 außerhalb des Normbereichs. Dabei ist ein Kriterium an die Ruhemessung des entsprechenden Luftmassenmessers dann erfüllt, wenn dessen Ruhesignal außerhalb des Normbereichs liegt, d.h. dieses Kriterium ist in dem Szenario der Fig. 5 für den Luftmassenmesser der Zylinderbank B2 erfüllt und für den Luftmassenmesser der Zylinderbank B1 nicht erfüllt.

Für einen Luftmassenmesser, der gemäß Fig. 2 nicht die Kriterien aus Schritt S102 erfüllt, werden schließlich die oben genannten Kriterien an die Adaptionswerte und die Ruhemessung überprüft. Nur im Falle, dass diese beiden Kriterien gleichzeitig erfüllt sind, wird auch dieser Luftmassenmesser als defekt detektiert (Schritt S103). Anderenfalls wird festgestellt, dass der Luftmassenmesser nicht defekt ist (Schritt S105). Betrachtet man die Adaptionswerte und Ruhemessungen für die Luftmassenmesser entsprechend der Figuren 4 und 5, wird nur der Luftmassenmesser der Zylinderbank B2 als defekt detektiert.

Die im Vorangegangenen beschriebene Ausführungsform des erfindungsgemäßen Verfahrens weist eine Reihe von Vorteilen auf. Insbesondere wird mit einem einfachen und schnellen Testverfahren eine gezielte automatische Prüfung der Luftmassenmesser in einem Kraftfahrzeug ermöglicht. Das Testverfahren ist dabei nicht invasiv und kann im Originalzustand des Motors ablaufen. Ein Ausbau der Luftmassenmesser zu deren Überprüfung ist nicht erforderlich. Es kann somit im Falle eines Gemischfehlers gezielt festgestellt werden, ob ein Luftmassenmesser hierfür verantwortlich ist, ohne dass hierzu Bauteile auf Verdacht getauscht werden müssen. Hierdurch werden die Anzahl von Wiederholreparaturen und damit die Kosten für den Kunden und den Fahrzeughersteller vermindert. Ferner wird durch eine dann robustere und schnellere Reparatur eine höhere Kundenzufriedenheit beim Fahrzeugnutzer erreicht.

### Bezugszeichen liste

- S1, S2, ..., S7: Schritte des Testablaufs
- P: Pfeil
- S101, S102, ..., S105: Schritte der Auswertung
- Δλ: Gemischabweichung
- LD1, ..., LD4: Leerlaufdrehzahlen
- B1, B2: Zylinderbänke
- AD: Adaptionswert
- D: Motordrehzahl
- RL: relative Last
- SI: Ruhesignal

## Patentansprüche

1. Verfahren zur Erkennung eines defekten Luftmassenmessers zur Detektion des Lustmassenstroms von Ansaugluft für eine Anzahl von Zylindern eines Verbrennungsmotors, insbesondere in einem Kraftfahrzeug, bei dem im Rahmen eines Testablaufs der Verbrennungsmotor mittels einer Vorsteuerung bei deaktivierter Gemischregelung betrieben wird, wobei die Vorsteuerung für das Gemisch aus Kraftstoff und Luft in den jeweiligen Zylindern Stellwerte ausgibt, welche im Normalbetrieb des Verbrennungsmotors über die Gemischregelung basierend auf einer Gemischabweichung (Δλ) des aktuellen Gemischs von einem stöchiometrischen Gemisch variiert werden, wobei
a) der Verbrennungsmotor auf eine oder mehrere unterschiedliche Leerlaufdrehzahlen (LD1, LD2, LD3, LD4) eingestellt wird und für eine jeweilige Leerlaufdrehzahl (LD1, LD2, LD3, LD4) die Gemischabweichung (Δλ) bei deaktivierter Gemischregelung erfasst wird;
b) im Falle, dass die erfasste Gemischabweichung (Δλ) oder erfassten Gemischabweichungen (Δλ) eine Anzahl von Kriterien erfüllen, der Luftmassenmesser als defekt eingestuft wird, wobei ein erstes Kriterium aus der Anzahl von Kriterien dann erfüllt ist, wenn die erfasste Gemischabweichung (Δλ) für eine der eingestellten Leerlaufdrehzahlen (LD1, LD2, LD3, LD4) ein vorbestimmtes Maß überschreitet.

2. Verfahren, nach Anspruch 1, **dadurch gekennzeichnet, dass** das erste Kriterium dann erfüllt ist, wenn die erfasste Gemischabweichung (Δλ) für die maximale eingestellte Leerlaufdrehzahl (LD4) ein vorbestimmtes Maß hin zu Gemischen mit Kraftstoffüberschuss gegenüber dem stöchiometrischen Gemisch überscheitet.

3. Verfahren nach Anspruch 1 oder 2, **dadurch gekennzeichnet, dass** der Verbrennungsmotor auf mehrere unterschiedliche Leerlaufdrehzahlen (LD1, LD2, LD3, LD4) eingestellt wird und die Anzahl von Kriterien ferner ein zweites und ein drittes Kriterium umfasst, wobei das zweite Kriterium dann erfüllt ist, wenn die erfasste Gemischabweichung (Δλ) bei steigenden eingestellten Leerlaufdrehzahlen (LD1, LD2, LD3, LD4) abnimmt, und wobei das dritte Kriterium dann erfüllt ist, wenn der betragsmäßige Unterschied zwischen der Gemischabweichung (Δλ) bei minimaler eingestellter Leerlaufdrehzahl (LD1) und maximaler eingestellter Leerlaufdrehzahl (LD4) ein vorgegebene s Maß überschreitet.

4. Verfahren nach einem der vorhergehenden Ansprüche, **dadurch gekennzeichnet, dass** die erfasste Gemischabweichung (Δλ) durch eine Abweichung des Lambda-Werts von 1 repräsentiert wird, wobei der Lambda-Wert insbesondere ein Mittelwert über mehrere, in einem stationären Messintervall gemessene Lambda-Werte für die jeweilige eingestellte Leerlaufdrehzahl (LD1, LD2, LD3, LD4) ist.

5. Verfahren nach Anspruch 4, **dadurch gekennzeichnet, dass**
- das erste Kriterium dann erfüllt ist, wenn der Lambda-Wert bei maximaler eingestellter Leerlaufdrehzahl (LD4) um mehr als einen vorgegebenen Schwellwert von 1 abweicht und dieser Lambda-Wert ferner vorzugsweise kleiner 1 ist;
und/oder
- das zweite Kriterium dann erfüllt ist, wenn der Lambda-Wert bei steigenden eingestellten Leerlaufdrehzahlen (LD1, LD2, LD3, LD4) größer wird und dabei vorzugsweise nie über 1 liegt;
und/oder
- das dritte Kriterium dann erfüllt ist, wenn der betragsmäßige Unterschied zwischen den Lambda-Werten bei minimaler eingestellter Leerlaufdrehzahl (LD1) und maximaler eingestellter Leerlaufdrehzahl (LD4) einen vorgegebenen Unterschiedswert überschreitet.

6. Verfahren nach Anspruch 5, **dadurch gekennzeichnet, dass** der vorgegebene Schwellwert zwischen 0,08 und 0,2, insbesondere bei 0,115, liegt und/oder dass der vorgegebene Unterschiedswert zwischen 0,03 und 0,1, insbesondere bei 0,06, liegt.

7. Verfahren nach einem der vorhergehenden Ansprüche, **dadurch gekennzeichnet, dass** der oder die voreingestellten Leerlaufdrehzahlen einen oder mehrere der folgenden Leerlaufdrehzahlwerte umfassen:
- einen Leerlaufdrehzahlwert zwischen 800 und 900 rpm, insbesondere bei 850 rpm;
- einen Leerlaufdrehzahlwert zwischen 1000 und 1100 rpm, insbesondere bei 1050 rpm;
- einen Leerlaufdrehzahlwert zwischen 1400 und 1600 rpm, insbesondere bei 1500 rpm;
- einen Leerlaufdrehzahlwert zwischen 1900 und 2100 rpm, insbesondere bei 2000 rpm.

8. Verfahren nach einem der vorhergehenden Ansprüche, **dadurch gekennzeichnet, dass** ein oder mehrere Betriebsparameter des Verbrennungsmotors für die jeweilige eingestellte Leerlaufdrehzahl (LD1, LD2, LD3, LD4) konstant gehalten werden, insbesondere die elektrische Last am Verbrennungsmotor und/oder die Steuerzeiten von Ventilen des Verbrennungsmotors und/oder die Kühlmitteltemperatur des Verbrennungsmotors.

9. Verfahren nach einem der vorhergehenden Ansprüche, **dadurch gekennzeichnet, dass** die von der Vorsteuerung ausgegebenen Stellwerte über prozentuale Adaptionswerte (AD) für jeweilige Betriebspunkte des Verbrennungsmotors mit zugeordneten Drehzahlen (D) adaptiert sind, wobei
- vor der Durchführung von Schritt a) Adaptionswerte (AD) für unterschiedliche Drehzahlen aus der Vorsteuerung ausgelesen werden und vorzugsweise anschließend in der Vorsteuerung rückgesetzt werden;
- im Falle, dass in Schritt b) der Luftmassenmesser nicht als defekt eingestuft wird, eine Anzahl von weiteren Kriterien umfassend ein Kriterium an die Adaptionswerte (AD) überprüft wird, wobei es zur Erfüllung des Kriteriums an die Adaptionswerte (AD) erforderlich ist, dass der ausgelesene minimale Adaptionswert eine vorgegebene erste Schwelle unterschreitet und der ausgelesene maximale Adaptionswert eine vorgegebene zweite Schwelle überschreitet;
- der Luftmassenmesser endgültig als defekt eingestuft wird, wenn die Anzahl von weiteren Kriterien erfüllt ist, und ansonsten der Luftmassenmesser weiterhin als nicht defekt eingestuft wird.

10. Verfahren nach Anspruch 9, **dadurch gekennzeichnet, dass** das Kriterium an die Adaptionswerte (AD) dann erfüllt ist, wenn der ausgelesene minimale Adaptionswert eine vorgegebene erste Schwelle, insbesondere -13 %, unterschreitet und der ausgelesene maximale Adaptionswert eine vorgegebene zweite Schwelle, insbesondere 1 %, überschreitet und ferner der Drehzahlwert des Verbrennungsmotors beim minimalen Adaptionswert unter einer ersten Drehzahlschwelle, insbesondere unterhalb von 1750 rpm, liegt und der Drehzahlwert des Verbrennungsmotors beim maximalen Adaptionswert oberhalb einer zweiten Drehzahlschwelle, insbesondere oberhalb 5250 rpm, liegt.

11. Verfahren nach Anspruch 9 oder 10, **dadurch gekennzeichnet, dass** bei ausgeschaltetem Verbrennungsmotor ein Ruhesignal (SI) des Luftmassenmessers erfasst wird und die Anzahl der weiteren Kriterien ferner ein Kriterium an das Ruhesignal (SI) umfasst, welches dann erfüllt ist, wenn das Ruhesignal (SI) außerhalb eines Normbereichs liegt.

12. Verfahren nach einem der vorhergehenden Ansprüche, **dadurch gekennzeichnet, dass** vor Beginn des Testablaufs das Vorliegen einer oder mehrerer, vom Verbrennungsmotor zu erfüllender Startbedingungen überprüft werden, wobei nur bei Erfüllung der Starbedingung oder Startbedingungen der Testablauf gestartet wird.

13. Verfahren nach Anspruch 12, **dadurch gekennzeichnet, dass** eine oder mehrere der Startbedingungen auf Fehlereinträgen im Fehlerspeicher des Steuergeräts des Verbrennungsmotors basieren und insbesondere eine Startbedingung derart ausgestaltet ist, dass die relative Last (RL) des Verbrennungsmotors bei den entsprechenden Fehlereinträgen unter einem Schwellwert, vorzugsweise unter 40%, liegt.

14. Motortesteinrichtung zur Erkennung eines defekten Luftmassenmessers zur Detektion des Lustmassenstroms von Ansaugluft für eine Anzahl von Zylindern eines Verbrennungsmotors, insbesondere in einem Kraftfahrzeug, wobei die Motortesteinrichtung zur Durchführung eines Verfahrens eingerichtet ist, bei dem im Rahmen eines Testablaufs der Verbrennungsmotor mittels einer Vorsteuerung bei deaktivierter Gemischregelung betrieben wird, wobei die Vorsteuerung für das Gemisch aus Kraftstoff und Luft in den jeweiligen Zylindern Stellwerte ausgibt, welche im Normalbetrieb des Verbrennungsmotors über die Gemischregelung basierend auf einer Gemischabweichung (Δλ) des aktuellen Gemischs von einem stöchiometrischen Gemisch variiert werden, wobei
a) der Verbrennungsmotor auf eine oder mehrere unterschiedliche Leerlaufdrehzahlen (LD1, LD2, LD3, LD4) eingestellt wird und für eine jeweilige Leerlaufdrehzahl (LD1, LD2, LD3, LD4) die Gemischabweichung (Δλ) bei deaktivierter Gemischregelung erfasst wird;
b) im Falle, dass die erfasste Gemischabweichung (Δλ) oder erfassten Gemischabweichungen (Δλ) eine Anzahl von Kriterien erfüllen, der Luftmassenmesser als defekt eingestuft wird, wobei ein erstes Kriterium aus der Anzahl von Kriterien dann erfüllt ist, wenn die erfasste Gemischabweichung (Δλ) für eine der eingestellten Leerlaufdrehzahlen (LD1, LD2, LD3, LD4) ein vorbestimmtes Maß überschreitet.

15. Motortesteinrichtung nach Anspruch 14, **dadurch gekennzeichnet, dass** die Motortesteinrichtung zur Durchführung eines Verfahrens nach einem der Ansprüche 2 bis 13 eingerichtet ist.

16. Kraftfahrzeug mit Verbrennungsmotor und einem oder mehreren Luftmassenmessern, **dadurch gekennzeichnet, dass** das Kraftfahrzeug eine Motortesteinrichtung nach Anspruch 14 oder 15 zum Testen des oder der Luftmassenmesser umfasst.

## Claims

1. A method for recognising a defective air mass flow meter for detecting the air mass flow of intake air for a number of cylinders of an internal combustion engine, especially in a motor vehicle, in which as part of a test procedure the internal combustion engine is operated by means of a pilot controller when the mixture control is deactivated, wherein the pilot controller outputs control values for the mixture of fuel and air in the respective cylinders which in normal operation of the internal combustion engine are varied via the mixture control based on a mixture deviation (Δλ) of the current mixture from a stoichiometric mixture, wherein
a) the internal combustion engine is set to one or more different idling speeds (LD1, LD2, LD3, LD4) and the mixture deviation (Δλ) when the mixture control is deactivated is detected for a respective idling speed (LD1, LD2, LD3, LD4);
b) in the event that the detected mixture deviation (Δλ) or detected mixture deviations (Δλ) satisfies/satisfy a number of criteria, the air mass flow meter is classified as defective, with a first criterion of the number of criteria being satisfied when the detected mixture deviation (Δλ) for one of the set idling speeds (LD1, LD2, LD3, LD4) exceeds a predetermined amount.

2. A method according to Claim 1, **characterised in that** the first criterion is satisfied when the detected mixture deviation (Δλ) for the maximum set idling speed (LD4) exceeds a predetermined amount in the direction of mixtures with excess fuel relative to the stoichiometric mixture.

3. A method according to Claim 1 or Claim 2, **characterised in that** the internal combustion engine is set to a plurality of different idling speeds (LD1, LD2, LD3, LD4) and the number of criteria further comprises a second and a third criterion, the second criterion being satisfied when the detected mixture deviation (Δλ) decreases as set idling speeds (LD1, LD2, LD3, LD4) increase, and the third criterion being satisfied when the difference in amounts between the mixture deviation (Δλ) at the minimum set idling speed (LD1) and at the maximum set idling speed (LD4) exceeds a specified amount.

4. A method according to one of the preceding claims, **characterised in that** the detected mixture deviation (Δλ) is represented by a deviation of the lambda value from 1, the lambda value being especially a mean value of a plurality of lambda values measured in a steady-state measuring interval for the respective set idling speed (LD1, LD2, LD3, LD4).

5. A method according to Claim 4, **characterised in that**
- the first criterion is satisfied when the lambda value at the maximum set idling speed (LD4) deviates by more than a specified threshold value from 1 and this lambda value is further preferably less than 1;
and/or
- the second criterion is satisfied when the lambda value becomes greater as set idling speeds (LD1, LD2, LD3, LD4) increase and in so doing is preferably never above 1;
and/or
- the third criterion is satisfied when the difference in amounts between the lambda values at the minimum set idling speed (LD1) and at the maximum set idling speed (LD4) exceeds a specified difference value.

6. A method according to Claim 5, **characterised in that** the specified threshold value lies between 0.08 and 0.2, especially is 0.115, and/or **in that** the specified difference value lies between 0.03 and 0.1, especially is 0.06.

7. A method according to one of the preceding claims, **characterised in that** the preset idling speed(s) comprise(s) one or more of the following idling speed values:
- an idling speed value of between 800 and 900 rpm, especially 850 rpm;
- an idling speed value of between 1000 and 1100 rpm, especially 1050 rpm;
- an idling speed value of between 1400 and 1600 rpm, especially 1500 rpm;
- an idling speed value of between 1900 and 2100 rpm, especially 2000 rpm.

8. A method according to one of the preceding claims, **characterised in that** one or more operating parameters of the internal combustion engine for the respective set idling speed (LD1, LD2, LD3, LD4) is/are kept constant, especially the electric load on the internal combustion engine and/or the timings of valves of the internal combustion engine and/or the coolant temperature of the internal combustion engine.

9. A method according to one of the preceding claims, **characterised in that** the control values which are output by the pilot controller are adapted by percentage adaptation values (AD) for respective operating points of the internal combustion engine with associated speeds (D), wherein
- before carrying out step a) adaptation values (AD) for different speeds are read out from the pilot controller and preferably are then reset in the pilot controller;
- in the event that the air mass flow meter is not classified as defective in step b), a number of further criteria comprising a criterion on the adaptation values (AD) are examined, wherein in order to satisfy the criterion on the adaptation values (AD) it is necessary for the read-out minimum adaptation value to be below a specified first threshold and for the read-out maximum adaptation value to exceed a specified second threshold;
- the air mass flow meter is finally classified as defective if the number of further criteria is satisfied, and otherwise the air mass flow meter continues to be classified as not defective.

10. A method according to Claim 9, **characterised in that** the criterion on the adaptation values (AD) is satisfied when the read-out minimum adaptation value drops below a specified first threshold, especially -13%, and the read-out maximum adaptation value exceeds a specified second threshold, especially 1%, and further the speed value of the internal combustion engine at the minimum adaptation value lies below a first speed threshold, especially below 1750 rpm, and the speed value of the internal combustion engine at the maximum adaptation value lies above a second speed threshold, especially above 5250 rpm.

11. A method according to Claim 9 or Claim 10, **characterised in that** when the internal combustion engine is switched off an idle signal (SI) of the air mass flow meter is detected and the number of the further criteria further comprises a criterion on the idle signal (SI) which is satisfied when the idle signal (SI) lies outside a standard range.

12. A method according to one of the preceding claims, **characterised in that** prior to the start of the test procedure the existence of one or more starting conditions which are to be satisfied by the internal combustion engine are checked, the test procedure being started only when the starting condition or starting conditions is/are satisfied.

13. A method according to Claim 12, **characterised in that** one or more of the starting conditions are based on fault entries in the fault memory of the control unit of the internal combustion engine, and especially one starting condition is configured in such a way that the relative load (RL) of the internal combustion engine in the corresponding fault entries lies below a threshold value, preferably below 40%.

14. An engine testing device for recognising a defective air mass flow meter for detecting the air mass flow of intake air for a number of cylinders of an internal combustion engine, especially in a motor vehicle, wherein the engine testing device is set up to carry out a method in which as part of a test procedure the internal combustion engine is operated by means of a pilot controller when the mixture control is deactivated, wherein the pilot controller outputs control values for the mixture of fuel and air in the respective cylinders which in normal operation of the internal combustion engine are varied via the mixture control based on a mixture deviation (Δλ) of the current mixture from a stoichiometric mixture, wherein
a) the internal combustion engine is set to one or more different idling speeds (LD1, LD2, LD3, LD4) and the mixture deviation (Δλ) when the mixture control is deactivated is detected for a respective idling speed (LD1, LD2, LD3, LD4);
b) in the event that the detected mixture deviation (Δλ) or detected mixture deviations (Δλ) satisfies/satisfy a number of criteria, the air mass flow meter is classified as defective, with a first criterion of the number of criteria being satisfied when the detected, mixture deviation (Δλ) for one of the set idling speeds (LD1, LD2, LD3, LD4) exceeds a predetermined amount.

15. An engine testing device according to Claim 14, **characterised in that** the engine testing device is set up to carry out a method according to one of Claims 2 to 13.

16. A motor vehicle with an internal combustion engine and one or more air mass flow meters, **characterised in that** the motor vehicle comprises an engine testing device according to Claim 14 or Claim 15 for testing the air mass flow meter or meters.

## Revendications

1. Procédé permettant d'identifier un capteur de masse d'air défectueux pour détecter le débit massique de l'air d'aspiration pour un ensemble de cylindres d'un moteur à combustion interne, en particulier dans un véhicule, selon lequel, dans le cadre d'une procédure de test, le moteur à combustion interne est actionné par une commande pilote, la régulation du mélange étant désactivée, la commande pilote délivrant, pour le mélange de carburant et d'air dans les cylindres respectifs des valeurs de réglage qui, en mode de fonctionnement normal du moteur à combustion interne par la régulation du mélange différent d'un écart de mélange (Δλ) du mélange actuel par rapport à un mélange stoechiométrique,
procédé selon lequel :
a) le moteur à combustion interne est réglé sur une ou plusieurs vitesse(s) de rotation en marche à vide différentes (LD1, LD2, LD3, LD4) et pour une vitesse de rotation en marche à vide respective (LD1, LD2, LD3, LD4) l'écart du mélange (Δλ) est détecté, la régulation du mélange étant désactivée,
b) lorsque l'écart du mélange ou les écarts du mélange (Δλ) détecté(s) remplissent un ensemble de critères, le capteur de masse d'air est considéré comme défectueux, un premier critère parmi l'ensemble de critères étant rempli lorsque l'écart du mélange (Δλ) détecté dépasse une valeur prédéfinie pour l'une des vitesses de rotation en marche à vide réglée (LD1, LD2, LD3, LD4).

2. Procédé conforme à la revendication 1,
**caractérisé en ce que**
le premier critère est rempli lorsque l'écart du mélange (Δλ) détecté pour la vitesse de rotation en marche à vide maximum réglée (LD4) dépasse une valeur prédéfinie vers des mélanges avec un excès de carburant par rapport au mélange stoechiométrique.

3. Procédé conforme à la revendication 1 ou 2,
**caractérisé en ce que**
le moteur à combustion interne est réglé sur plusieurs vitesses de rotation en marche à vide (LD1, LD2, LD3, LD4) différentes, et, l'ensemble de critères comprend en outre un second critère et un troisième critère, le second critère étant rempli lorsque l'écart du mélange (Δλ) détecté diminue lorsque les vitesses de rotation en marche à vide (LD1, LD2, LD3, LD4) réglées augmentent, et le troisième critère étant rempli lorsque la différence entre l'écart du mélange (Δλ) pour la vitesse de rotation en marche à vide minimum réglée (LD1) et pour la vitesse de rotation en marche à vide maximum réglée (LD4) dépasse une valeur prédéfinie.

4. Procédé conforme à l'une des revendications précédentes,
**caractérisé en ce que**
l'écart du mélange (Δλ) détecté est représenté par un écart de la valeur lambda de 1, la valeur lambda étant en particulier une valeur moyenne de plusieurs valeurs lambda mesurées dans un intervalle de mesure stationnaire pour les différentes vitesses de rotation en marche à vide (LD1, LD2, LD3, LD4) réglées.

5. Procédé conforme à la revendication 4,
**caractérisé en ce que**
- le premier critère est rempli lorsque pour la vitesse de rotation en marche à vide (LD4) maximum réglée, la valeur lambda s'écarte de plus d'une valeur de seuil prédéfinie de 1 et que cette valeur lambda est en outre de préférence inférieure à 1, et/ou
- le second critère est rempli lorsque, pour des vitesses de rotation en marche à vide (LD1, LD2, LD3, LD4) réglées qui augmentent la valeur lambda devient plus grande, et, de préférence, n'est pas supérieure à 1, et/ou
- le troisième critère est rempli lorsque la différence entre les valeurs lambda pour la vitesse de rotation en marche à vide minimum réglée (LD1) et la vitesse de rotation en marche à vide maximum réglée (LD4) dépasse une valeur de différence prédéfinie.

6. Procédé conforme à la revendication 5,
**caractérisé en ce que**
la valeur de seuil prédéfinie est comprise entre 0,08 et 0,2, et est en particulier égale à 0,115, et/ou la valeur de différence prédéfinie est comprise entre 0,03 et 0,1 et est en particulier égale à 0,06.

7. Procédé conforme à l'une des revendications précédentes,
**caractérisé en ce que**
la ou les vitesse(s) de rotation en marche à vide préréglée(s) comprennent au moins l'une des valeurs de vitesse de rotation en marche à vide suivantes :
- une valeur de vitesse de rotation en marche à vide comprise entre 800 et 900 rpm, en particulier égale à 850 rpm,
- une valeur de vitesse de rotation en marche à vide comprise entre 1000 et 1100 rpm, en particulier égale à 1050 rpm,
- une valeur de vitesse de rotation en marche à vide comprise entre 1400 et 1600 rpm, en particulier égale à 1500 rpm,
- une valeur de vitesse de rotation en marche à vide comprise entre 1900 et 2100 rpm, en particulier égale à 2000 rpm.

8. Procédé conforme à l'une des revendications précédentes,
**caractérisé en ce qu'**
au moins un paramètre de fonctionnement du moteur à combustion interne est maintenu constant pour les vitesses de rotation en marche à vide respectivement réglées (LD1, LD2, LD3, LD4), en particulier la charge électrique du moteur à combustion interne et/ou les temps de commande des ventilateurs du moteur à combustion interne et/ou la température du fluide de refroidissement du moteur à combustion interne.

9. Procédé conforme à l'une des revendications précédentes,
**caractérisé en ce que**
les valeurs de réglage délivrées par la commande pilote sont adaptées par l'intermédiaire de valeurs d'adaptation sous forme de pourcentage (AD) pour chacun des points de fonctionnement du moteur à combustion interne avec des vitesses de rotation (D) associées,
procédé selon lequel,
- avant la mise en oeuvre de l'étape a) des valeurs d'adaptation (AD) pour différentes vitesses de rotation sont extraites de la commande pilote, et de préférence remises ensuite dans la précommande,
- lorsque, dans l'étape b), le capteur de masse d'air n'a pas été considéré comme défectueux, un ensemble d'autres critères, comprenant un critère concernant les valeurs d'adaptation (AD) est contrôlé, et, pour remplir le critère concernant les valeurs d'adaptation (AD) il est nécessaire que la valeur d'adaptation minimum extraite passe au-dessous d'un premier seuil prédéfini, et que la valeur d'adaptation maximum extraite dépasse un second seuil prédéfini,
- le capteur de masse d'air est finalement considéré comme défectueux lorsque l'ensemble d'autres critères est rempli, et sinon, le capteur de masse d'air continue à être considéré comme non défectueux.

10. Procédé conforme à la revendication 9,
**caractérisé en ce que**
le critère concernant les valeurs d'adaptation (AD) est rempli lorsque la valeur d'adaptation minimum extraite passe au-dessous d'un premier seuil prédéfini, en particulier -13%, et que la valeur d'adaptation maximum extraite dépasse un second seuil prédéfini, en particulier 1%, et, en outre, que pour la valeur d'adaptation minimum la valeur de la vitesse de rotation du moteur à combustion interne est située au-dessous d'un premier seuil de vitesse de rotation, en particulier au-dessous de 1750 rpm et que, pour la valeur d'adaptation maximum, la valeur de la vitesse de rotation du moteur à combustion interne est située au-dessus d'un second seuil de vitesse de rotation, en particulier au-dessus de 5250 rpm.

11. Procédé conforme à la revendication 9 ou 10,
**caractérisé en ce que**
lorsque le moteur à combustion interne est coupé, un signal de repos (SI) du capteur de masse d'air est détecté, et l'ensemble d'autres critères comprend en outre un critère concernant le signal de repos (SI) qui est rempli lorsque ce signal de repos (SI) est situé à l'extérieur d'une plage normale.

12. Procédé conforme à l'une des revendications précédentes,
**caractérisé en ce qu'**
avant le début de la procédure de test, la présence d'au moins une condition de démarrage devant être remplie par le moteur à combustion interne est contrôlée, et, la procédure de test n'est démarrée que lorsque la condition de démarrage est remplie.

13. Procédé conforme à la revendication 12,
**caractérisé en ce qu'**
au moins une condition de démarrage est basée sur des entrées défectueuses dans la mémoire de défaut de l'appareil de commande du moteur à combustion interne, et, en particulier une condition de démarrage est conçue de sorte que la charge relative (RL) du moteur à combustion interne soit située lors des entrées défectueuses correspondantes au-dessous d'une valeur de seuil, en particulier au-dessous de 40%.

14. Dispositif de test de moteur permettant d'identifier un capteur de masse d'air défectueux pour détecter le débit massique de l'air d'aspiration pour un ensemble de cylindres d'un moteur à combustion interne, en particulier dans un véhicule, cette installation de test de moteur permettant la mise en oeuvre d'un procédé selon lequel, dans le cadre d'une procédure de test, le moteur à combustion interne est actionné par une commande pilote la régulation du mélange étant désactivée, la commande pilote délivrant, pour le mélange de carburant et d'air dans chaque cylindre, des valeurs de réglage, qui, en mode de fonctionnement normal du moteur à combustion interne, par la régulation du mélange différent d'un écart de mélange (Δλ) du mélange actuel par rapport à un mélange stoechiométrique,
procédé selon lequel :
a) le moteur à combustion interne est réglé sur une ou plusieurs vitesse(s) de rotation en marche à vide différentes (LD1, LD2, LD3, LD4), et pour une vitesse de rotation en marche à vide respective (LD1, LD2, LD3, LD4) l'écart de mélange (Δλ) est détecté, la régulation du mélange étant désactivée,
b) lorsque le ou les écart(s) de réglage (Δλ) détecté(s) remplissent un ensemble de critères, le capteur de masse d'air est considéré comme défectueux, un premier critère parmi l'ensemble de critères étant rempli lorsque l'écart du mélange (Δλ) détecté dépasse une valeur prédéfinie pour l'une des vitesses de rotation en marche à vide (LD1, LD2, LD3, LD4) réglées.

15. Dispositif de test de moteur conforme à la revendication 14,
**caractérisé en ce qu'**
il est adapté à la mise en oeuvre d'un procédé conforme à l'une des revendications 2 à 13.

16. Véhicule équipé d'un moteur à combustion interne et d'au moins un capteur de mesure de masse d'air,
**caractérisé en ce que**
le véhicule comporte un dispositif de test du moteur conforme à la revendication 14 ou 15 permettant de tester le ou les capteur(s) de masse d'air.
